# EUROPÄISCHE PATENTANMELDUNG

(11) **EP 0 944 224 A2**
(43) Veröffentlichungstag der Anmeldung: **22.09.1999**
(21) Anmeldenummer: 98122776.2
(22) Anmeldetag: 01.12.1998
(51) Int. Cl.: H04M 3/50, H04M 3/60, H04M 3/62, H04M 3/42

(54) **Verfahren zur Handhabung einer Telekommunikationseinrichtung**

(30) Priorität: 18.03.1998 DE 19811721
(71) Anmelder: ROBERT BOSCH GMBH, 70442 Stuttgart (DE)
(72) Erfinder: Maldener, Nico-Johannes, 71229 Leonberg (DE); Glaser, Ulrich, 70499 Stuttgart (DE)

(57) **Zusammenfassung**

Die Erfindung betrifft ein Verfahren zur Handhabung einer Telekommunikationseinrichtung, mit einer manuell bedienbaren Benutzeroberfläche zur Vermittlung wenigstens einer ankommenden Kommunikationsverbindung zu wenigstens einem internen Teilnehmer, und mit einem bei einer manuellen Quittierung eine spezifische Programmreaktion auslösenden Fokus.

Es ist vorgesehen, daß ein eingehender Anruf mit einer Datenbank der Telekommunikationseinrichtung verknüpft wird, und daß einer Bedienperson der Telekommunikationseinrichtung visuell mittels einer Bildschirmdarstellung anruferbezogene Informationen zur Verfügung gestellt werden.

## Beschreibung

Die Erfindung betrifft ein Verfahren zur Handhabung einer Telekommunikationseinrichtung mit den im Oberbegriff des Anspruchs 1 genannten Merkmalen.

### Stand der Technik

Bei bekannten Vermittlungszentralen von Telekommunikationseinrichtungen werden bei einem Vermittlungsvorgang Anrufe und zu diesen Anrufen gehörende und diese ergänzende Informationen ungeordnet und ungebündelt weitergegeben. Bei einer Weiterbearbeitung der Anrufe werden die Informationen zudem nur teilweise und meist unvollständig mit dem Anruf verknüpft.

### Vorteile der Erfindung

Das erfindungsgemäße Verfahren zur Handhabung einer Telekommunikationseinrichtung weist den Vorteil einer für eine Bedienperson der Telekommunikationseinrichtung äußerst übersichtlichen und damit ergonomisch günstigen Bildschirmdarstellung verschiedenster in einer Datenbank verfügbar gehaltenen anruferbezogenen Informationen mit einer Rufnummer eines Anrufers auf. Durch eine Bündelung der verschiedenen Informationen in Form eines Objektes und einer Darstellung in Form beispielsweise einer Visitenkarte, die der Bedienperson während eines gesamten Vermittlungsvorganges visuell zur Verfügung gestellt werden, ist für die Bedienperson eine sehr sichere und zuverlässige Handhabung und Zuordnung zu gewünschten Adressaten beziehungsweise Teilnehmern der Telekommunikationseinrichtung ermöglicht.

Unabhängig von sequentiell vorzunehmenden Bedienschritten zur Herstellung einer Verbindung bleiben die anruferbezogenen Informationen jederzeit sichtbar. Eine einfache und fehlerunanfällige manuelle Bedienung kann durch eine veränderliche Fokussteuerung sowie durch einen speziellen, mittels leicht verständlicher Symbole selbsterklärenden, Multifunktionsknopf gewährleistet werden. Durch Implementierung der bekannten Windows®-Applikation "Drag & Drop" bei der Bedienung kann in kürzester Zeit bei weitestgehender Transparenz durch die Möglichkeit einer Verfolgung aller Verschiebe- und Bedienvorgänge am Bildschirm eine Vermittlung hergestellt werden. Die Bedienung erfolgt grundsätzlich anhand der alle wichtigen Informationen permanent bereitstellenden Visitenkarte.

Weitere vorteilhafte Ausgestaltungen der Erfindung ergeben sich aus den übrigen, in den Unteransprüchen genannten Merkmalen.

### Zeichnungen

Die Erfindung wird nachfolgend in Ausführungsbeispielen anhand der zugehörigen Zeichnungen näher erläutert. Es zeigen:
- Figur 1: eine Bildschirmdarstellung bei Eingang eines neuen Anrufes bei einer Telekommunikationseinrichtung;
- Figur 2: eine Bildschirmdarstellung eines auf eine Abfrageseite gelegten Anrufes;
- Figur 3: ein Multifunktionsknopf in einer Bildschirmdarstellung;
- Figur 4: eine Bildschirmdarstellung einer Internverbindung und
- Figur 5: eine Bildschirmdarstellung einer Anrufliste.

### Beschreibung der Ausführungsbeispiele

Bei dem erfindungsgemäßen Verfahren zur Handhabung von Telekommunikationseinrichtungen erfolgt während der Bearbeitung und Vermittlung von eingehenden Anrufen eine Auswahl aus einer Datenbank von zu den Anrufen passenden Daten, eine Zuordnung zu diesen und eine Weitervermittlung zusammen mit den Anrufen. Diese Verknüpfungen erfolgen für den Benutzer, üblicherweise eine Bedienerperson an einem Vermittlungsplatz einer Telekommunikationseinrichtung, anschaulich und übersichtlich, so daß er die Verknüpfungsvorgänge jederzeit auf einem Bildschirm mitverfolgen, überwachen und gegebenenfalls modifizieren kann.

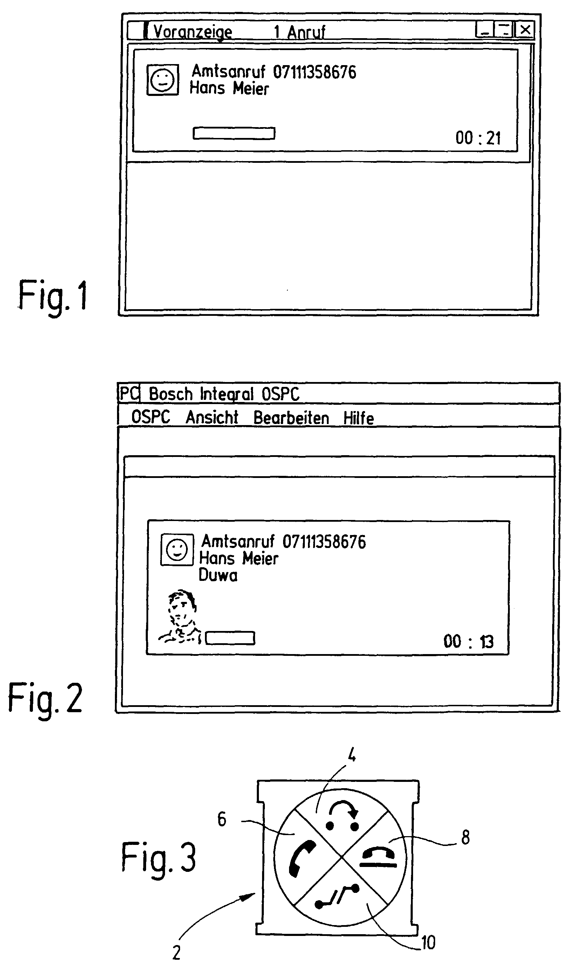

Figur 1 zeigt in einer beispielhaften Bildschirmdarstellung eine Voranzeige, die sich einer Bedienperson bietet, wenn ein Anruf an den Vermittlungsplatz eingeht. Ein eingehender Anruf gelangt nur dann in die Voranzeige, wenn bereits ein Gespräch geführt wird oder weitere Anrufe anstehen. Wenn die anrufende Verbindungsnummer bereits bekannt, das heißt beispielsweise in einem Speicher der Datenbank verfügbar ist, wird am Bildschirm in einer ersten Zeile die Rufnummer und die Art des Anrufes, in einer Zeile darunter der Name des Anrufers (falls bekannt) und in einer weiteren Zeile darunter eine bereits verstrichene Wartezeit für den Anrufer angezeigt. Darüber hinaus kann eine Verknüpfung der Rufnummer mit einem in einer Datenbank abgelegten Symbol, beispielsweise eine Portraitabbildung oder -skizze des Anrufers oder dergleichen, erfolgen und zur Anzeige gebracht werden. Neben einer Anzeige der bereits verstrichenen Wartezeit kann die Anzahl der bereits erfolgten vergeblichen Anrufversuche dargestellt werden.

Der Bediener kann auf Basis dieser in Form einer sogenannten Visitenkarte angezeigten Informationen entscheiden, wie er mit dem Anruf weiter verfahren will. Zur Verdeutlichung der erfindungsgemäßen Vereinfachung der Handhabung wird im folgenden eine Weitervermittlung mit Hilfe der bekannten Windows®-Funktion "Drag&Drop" beschrieben. Hierzu wird die Visitenkarte von der Bedienperson mit einer Computermaus angeklickt und von einer Zuteilseite der Bildschirmdarstellung auf eine Abfrageseite verschoben.

Figur 2 zeigt eine Visitenkarte eines auf die Abfrageseite gelangten Anrufes. Die Visitenkarte enthält hierbei wiederum die Rufnummer des Anrufers, seinen Namen (falls bekannt), das über eine Datenbank mit der Rufnummer verknüpfte Symbol, die Art des Anrufs, einen Zustand der Verbindung und eine bereits verstrichene Gesprächszeit.

Anstatt die Windows®-Funktion "Drag&Drop" zur Vermittlung beziehungsweise Zuteilung des Anrufes zu gebrauchen, kann das Programm wahlweise ebenso mit einem im folgenden beschriebenem Multifunktionsknopf 2 bedient werden.

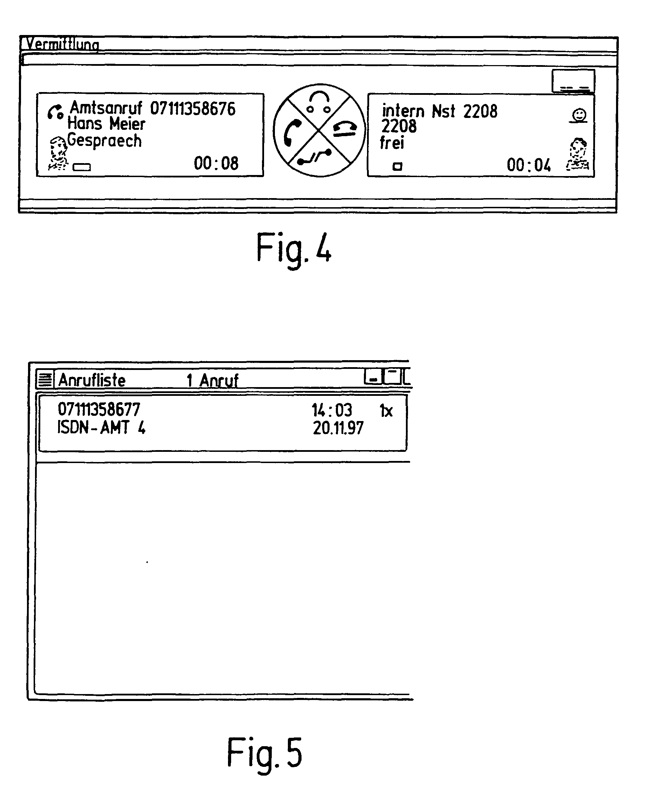

Figur 3 zeigt diesen kreisrunden Multifunktionsknopf 2 mit vier gleichgroßen Feldern 4, 6, 8, 10 in einer Bildschirmdarstellung mit jeweils einem Symbol auf jedem der Felder 4, 6, 8, 10. Hierbei bewirkt das obere Symbol 4 ein Zuteilen eines Anrufes, das linke Symbol 6 eine Abfrage, das rechte Symbol 8 ein Gesprächsende und das untere Symbol 10 ein Trennen eines Gespräches. Die Bedienung des Multifunktionsknopfes 2 kann in bekannter Weise durch Anklicken mit der Computermaus oder durch einfache Bedienung der RETURN-Taste erfolgen. Hierzu ist es zweckmäßig, wenn der Fokus der RETURN-Taste je nach Programmstatus eine veränderliche Belegung erfahren kann. Unter einem Fokus wird in diesem Zusammenhang eine hervorgehobene Stelle beziehungsweise Funktion der Bedienoberfläche verstanden, die bei Betätigung der RETURN-Taste eine bestimmte, vom Programm vorgegebene Aktion auslöst.

Da als nächstes zu erwarten ist, daß der Anrufer einem internen Teilnehmer der Telekommunikationsanlage zugeteilt wird, stehen hierfür mehrere Funktionen zur Verfügung. Die Zuteilung kann entweder über ein sogenanntes BusyView-Fenster erfolgen, das die Teilnehmerzustände, nämlich "frei" oder "besetzt", der Telekommunikationsanlage wiedergeben kann. Jedem einzelnen Teilnehmer ist hierbei eine eigene Taste zugewiesen. Bei einer Zuteilung über BusyView muß die Vermittlungsperson per Mauszeiger die Visitenkarte des Anrufers von der Abfrageseite auf die gewünschte Taste des Teilnehmers im BusyView ziehen. Der Zuteilvorgang wird dadurch automatisch abgeschlossen.

Figur 4 zeigt eine wahlweise mögliche Zuteilung über die Zuteilseite. Hierbei kann der Benutzer durch ein Anklicken der Funktion "Zuteilen" des Multifunktionsknopfes 2 oder mit Hilfe eines anpassungsfähigen Fokus durch die RETURN-Taste auf die Zuteilseite wechseln und dort eine Rufnummer auswählen. Dadurch wird automatisch eine zweite Visitenkarte für den Internteilnehmer erstellt. Diese gibt, wie in der Figur 4 erkennbar, die Rufnummer des Internteilnehmers, seinen Namen, ein Symbol, das über eine Datenbank mit der Rufnummer verknüpft wird, die Art des Anrufs, den Zustand der Verbindung und die Gesprächszeit wieder.

Durch nochmaliges Drücken der RETURN-Taste oder durch ein sogenanntes Drag&Drop der Visitenkarte von der Abfrage- auf die Zuteilseite wird der Vermittlungsvorgang beendet. Die gleiche Funktion wird mit der Taste 8 (Ende) im Multifunktionsknopf 2 erreicht.

Figur 5 verdeutlicht eine Situation eines nicht abgefragten, das heißt eines nicht weiterverbundenen Anrufes. Der Anruf wird in diesem Fall anhand seiner Visitenkarte in einer Anrufliste abgespeichert, die für die Bedienperson auf dem Bildschirm in einer übersichtlichen Tabelle neben der Rufnummer des Anrufers seinen Namen (falls bekannt), das Datum und die Uhrzeit des letzten Anrufversuchs sowie die Anzahl der vergeblichen Anrufe bereitstellt.

Durch ein Doppelklicken oder durch Drag&Drop kann die Bedienperson die Visitenkarte aus der Anrufliste auf die Abfrageseite zurückrufen.

## Patentansprüche

1. Verfahren zur Handhabung einer Telekommunikationseinrichtung, mit einer manuell bedienbaren Benutzeroberfläche zur Vermittlung wenigstens einer ankommenden Kommunikationsverbindung zu wenigstens einem internen Teilnehmer, und mit einem bei einer manuellen Quittierung eine spezifische Programmreaktion auslösenden Fokus, **dadurch gekennzeichnet,** daß ein eingehender Anruf mit einer Datenbank der Telekommunikationseinrichtung verknüpft wird, und daß einer Bedienperson der Telekommunikationseinrichtung visuell mittels einer Bildschirmdarstellung anruferbezogene Informationen zur Verfügung gestellt werden.

2. Verfahren nach Anspruch 1, **dadurch gekennzeichnet,** daß die anruferbezogenen Informationen in Form einer Visitenkarte dargestellt werden.

3. Verfahren nach Anspruch 2, **dadurch gekennzeichnet,** daß die Bildschirmdarstellung der Visitenkarte wenigstens eine Rufnummer des eingehenden Anrufes und eine bereits verstrichene Zeit seit dem Anruf umfaßt.

4. Verfahren nach einem der Ansprüche 2 oder 3, **dadurch gekennzeichnet,** daß die in der Datenbank enthaltenen und der Bedienperson zur Anzeige gebrachten Informationen einen Namen des Anrufers und/oder eine Art des Anrufes (extern oder intern) umfassen.

5. Verfahren nach einem der Ansprüche 2 oder 3, **dadurch gekennzeichnet,** daß die in der Datenbank enthaltenen und der. Bedienperson zur Anzeige gebrachten Informationen eine Portraitabbildung oder eine Portraitskizze des Anrufers umfassen.

6. Verfahren nach einem der Ansprüche 3 bis 5, **dadurch gekennzeichnet,** daß die Bedienperson einen eingehenden Anruf mittels Ziehen der Visitenkarte mit einer Computermaus auf eine Abfrageseite der Bildschirmdarstellung ziehen kann.

7. Verfahren nach Anspruch 6, **dadurch gekennzeichnet,** daß ein auf die Abfrageseite gezogener Anruf visuell mit Informationen über einen Zustand der Verbindung und/oder mit einer bereits verstrichenen Gesprächszeit versehen wird.

8. Verfahren nach Anspruch 5, **dadurch gekennzeichnet,** daß die Bedienperson einen eingehenden Anruf mittels Drücken eines visuellen Multifunktionsknopfes (2) auf der Bildschirmdarstellung mit unterschiedlichen Funktionen verknüpfen kann.

9. Verfahren nach Anspruch 8, **dadurch gekennzeichnet,** daß die Darstellung des Multifunktionsknopfes (2) vier Bedienfelder (4, 6, 8, 10) aufweist, die bei Aufruf unterschiedliche Programmfunktionen auslösen.

10. Verfahren nach Anspruch 9, **dadurch gekennzeichnet,** daß die Bedienfelder (4, 6, 8, 10) die Funktionen "Zuteilen'' (4), "Abfrage" (6), "Ende" (8) und "Trennen" (10) umfassen.

11. Verfahren nach einem der vorhergehenden Ansprüche, **dadurch gekennzeichnet,** daß die aus dem Fokus resultierenden Programmreaktionen in Abhängigkeit von Abläufen des Vermittlungsvorganges veränderlich sind.

12. Verfahren nach Anspruch 11, **dadurch gekennzeichnet,** daß der Fokus mit unterschiedlich sequentiell ablaufenden Funktionen belegbar ist.

13. Verfahren nach Anspruch 12, **dadurch gekennzeichnet,** daß die Funktionen des Fokus in Abhängigkeit von Benutzereingaben automatisch veränderlich sind.

14. Verfahren nach Anspruch 13, **dadurch gekennzeichnet,** daß ein nicht abgefragter Anruf in Form einer Visitenkarte in einer Anrufliste gespeichert wird.

15. Verfahren nach Anspruch 14, **dadurch gekennzeichnet,** daß die in der Anrufliste gespeicherte Visitenkarte wenigstens die Rufnummer des Anrufers und die Anzahl von vergeblichen Anrufen umfaßt.

16. Verfahren nach Anspruch 15, **dadurch gekennzeichnet,** daß die Visitenkarte zusätzlich ein Datum und eine Uhrzeit eines letzten Anrufversuchs umfaßt.

17. Verfahren nach Anspruch 16, **dadurch gekennzeichnet,** daß die Visitenkarte den Namen des Anrufers umfassen kann.
